# EUROPEAN PATENT APPLICATION

(11) **EP 3 678 082 A1**
(43) Date of publication of application: **08.07.2020**
(21) Application number: 20150284.6
(22) Date of filing: 03.01.2020
(51) Int. Cl.: G06Q 30/02, G06Q 20/20, G06Q 20/32

(54) **SERVER, METHOD AND RECORDING MEDIUM STORING COMMANDS FOR MANAGING CUSTOMERS**

(30) Priority: 04.01.2019 KR 20190001188; 04.06.2019 KR 20190065900
(71) Applicant: Hyundai Card Co., Ltd., Seoul 07237 (KR)
(72) Inventor: Ko, Jun Won, 07237 Seoul (KR); Oh, Ji Won, 07237 Seoul (KR); Koh, Dong Jo, 07237 Seoul (KR); Park, Yeon Joo, 07237 Seoul (KR); Choi, Yu Kyung, 07237 Seoul (KR); Shin, Dong Hyuk, 07237 Seoul (KR); Jang, Eun Sun, 07237 Seoul (KR); Lee, Kyoung Min, 07237 Seoul (KR); Lee, Ye Jin, 07237 Seoul (KR)
(74) Representative: Frey, Sven Holger

(57) **Abstract**

The present disclosure proposes a server for customer management. The server according to the present disclosure may include a processor and/or a memory. The processor may process a payment by a first user based on payment information, generate evaluation tag information including an evaluation tag to be displayed at a first terminal, deliver the evaluation tag information to the first terminal, acquire information indicating a third evaluation tag selected by the first user from the first terminal, deliver statistical information including the number of users who have selected the evaluation tag to a shop terminal, acquire information indicating a customer management message and a coupon to be sent to a user who has selected a predetermined evaluation tag from the shop terminal, and deliver the information indicating the customer management message and the coupon to the corresponding terminal.

## Description

### TECHNICAL FIELD

The present disclosure relates to a technique for managing customers.

### BACKGROUND

Food service shops (e.g., restaurants) make a variety of efforts to manage customers who have visited the corresponding shops. For example, the shops can perform customer management by acquiring Voice of the Customer (VoC) from customers, analyzing the customers' demands or complaints, and interacting with the customers accordingly.

However, it may not be easy to acquire VoC from customers. The VoC acquisition process itself causes customers to feel fatigued and there is a tendency that only extremely negative VoCs are acquired. Thus, the acquired VoC may not be objective. Also, it may not be easy to send messages for customer management and/or to send coupons that can be used in the shop to customers in order to communicate with the customers. It may be inherently difficult to collect contacts of the customers, and providing coupons irrelevant to customer complaints may not be significantly effective in terms of customer management. Even when managing some of the customers as regular customers, criteria for designating a customer as a regular customer may be ambiguous, it may be difficult to predict the number of regular customers, and it may also be difficult for all shop staff members to recognize the regular customers.

### SUMMARY

Various embodiments of the present disclosure provide a technique for managing customers.

In one aspect of the present disclosure, a server for customer management may be proposed. A server for managing a plurality of users who make payments in a shop according to one embodiment of the present disclosure may include one or more processors and one or more memories storing commands that cause the one or more processors to perform an operation when the commands are executed by the one or more processors, wherein the one or more processors are configured to: process a payment by a first user among the plurality of users based on payment information acquired from a first terminal of the first user; generate evaluation tag information including at least one second evaluation tag that is selected from among a plurality of first evaluation tags for the shop and that is to be displayed at the first terminal; deliver the evaluation tag information to the first terminal; acquire, from the first terminal, information indicating a third evaluation tag selected by the first user from among the at least one second evaluation tag; associate and store user information of the first user, the payment information and the third evaluation tag in the one or more memories; deliver, to a shop terminal of the shop, statistical information including the number of users who have selected each of the plurality of first evaluation tags for a predetermined period from among the plurality of users; acquire, from the shop terminal, information indicating a customer management message and a coupon to be sent to at least one second user who has selected the third evaluation tag among the plurality of users; and deliver the information indicating the customer management message and the coupon to a second terminal of the at least one second user.

In an embodiment, each of the plurality of first evaluation tags includes a positive evaluation or a negative evaluation on one category selected from among a quality level, a price level, a service level and an atmosphere of the shop.

In an embodiment, the one or more processors are further configured to: generate the evaluation tag information including a first evaluation tag group and a second evaluation tag group, wherein the first evaluation tag group includes an evaluation tag to be displayed at the first terminal among the at least one second evaluation tag according to an input, to the first terminal by the first user, that indicates the first user is willing to return to the shop, and wherein the second evaluation tag group includes an evaluation tag to be displayed at the first terminal among the at least one second evaluation tag according to an input, to the first terminal by the first user, that indicates the first user is not willing to return to the shop.

In an embodiment, the one or more processors are further configured to: determine an average value of amounts that have been paid by the plurality of users based on payment history information of the plurality of users for the shop; compare the average value to a first amount to be paid by the first user which is acquired from the payment information; upon determining that the first amount to be paid is smaller than the average value by a predetermined percentage or higher, add an evaluation tag corresponding to a positive evaluation on the price level of the shop to the first evaluation tag group; and upon determining that the first amount to be paid is larger than the average value by the predetermined percentage or higher, add an evaluation tag corresponding to a negative evaluation on the price level of the shop to the second evaluation tag group.

In an embodiment, the one or more processors are further configured to: determine whether a reception time when the payment information is acquired from the first terminal is within a predetermined time interval in business hours of the shop; upon determining that the reception time is not within the time interval, add an evaluation tag corresponding to a positive evaluation on the atmosphere and the service level of the shop to the first evaluation tag group; and upon determining that the reception time is within the time interval, add an evaluation tag corresponding to a negative evaluation on the atmosphere and the service level of the shop to the second evaluation tag group.

In an embodiment, the one or more processors are further configured to: acquire, from the one or more memories, evaluation tags previously selected for the shop by the first user; determine a category that the previously selected evaluation tags indicate with a highest frequency among the quality level, the price level, the atmosphere and the service level of the shop; and add an evaluation tag corresponding to a positive evaluation on the determined category to the first evaluation tag group, and add an evaluation tag corresponding to a negative evaluation on the determined category to the second evaluation tag group.

In an embodiment, the one or more processors are further configured to: determine at least one recommended message and at least one recommended coupon that correspond to the third evaluation tag and that are to be displayed at the shop terminal; deliver information indicating the at least one recommended message and the at least one recommended coupon to the shop terminal; and acquire, from the shop terminal, information indicating the customer management message selected from among the at least one recommended message, and information indicating the coupon selected from among the at least one recommended coupon.

In an embodiment, the one or more processors are further configured to: when the third evaluation tag is an evaluation tag corresponding to a negative evaluation on the price level of the shop, determine a price discount coupon for the shop for each discount rate as the at least one recommended coupon; and determine the each discount rate for the price discount coupon in proportion to the ratio of the number of users who have selected the third evaluation tag to the plurality of users.

In an embodiment, the one or more processors are further configured to: at the time when the coupon expires, deliver, to the shop terminal, information indicating the number of at least one third user who has used the coupon among the at least one second user, and information indicating a sales amount incurred in the shop by the at least one third user.

In an embodiment, the one or more processors are further configured to: acquire, from the shop terminal, designated-user determination information including at least one of a payment number condition, a payment amount condition and a payment frequency condition of designated users for the shop; determine at least one of the plurality of users as the designated users for the shop based on payment history information for the shop of the plurality of users and the designated-user determination information; deliver information indicating the number of the designated users to the shop terminal; acquire, from the shop terminal, designated-user benefit information indicating a benefit to be provided to the designated users; and deliver, to terminals of the designated users, information for displaying the benefit and information for generating an image indicating that a corresponding user is one of the designated users based on the designated-user benefit information.

In an embodiment, the one or more processors are further configured to: acquire, from a fourth terminal of a fourth user among the plurality of users, information indicating an identifier of the shop, an identifier of a user group including the first user and the fourth user, a total amount to be paid which has been incurred by the user group, an identifier of the first user, and an amount to be paid by the fourth user corresponding to a portion of the total amount to be paid; approve a payment of the amount to be paid by the fourth user, and deliver payment status information indicating a payment status for the total amount to be paid to the first terminal and the shop terminal; acquire, from the first terminal, the payment information indicating a first payment amount to be paid by the first user corresponding to a portion of an unpaid amount out of the total amount to be paid; approve the payment of the first amount to be paid by the first user, update the payment status information, and deliver the updated payment status information to the first terminal, the fourth terminal and the shop terminal; deliver a notification indicating that a payment of the total amount to be paid is completed to the shop terminal when the payment of the total amount to be paid is completed; and acquire a notification indicating that a completion of the payment of the total amount to be paid is confirmed from the shop terminal.

In one aspect of the present disclosure, a method for customer management may be proposed. The method according to an aspect of the present disclosure may be a method performed by a server including one or more processors and one or more memories configured to store commands to be executed by the one or more processors. The method is to manage a plurality of users who make payments in a shop. The method according to an aspect of the present disclosure may include processing a payment by a first user among the plurality of users based on payment information acquired from a first terminal of the first user; generating evaluation tag information including at least one second evaluation tag that is selected from among a plurality of first evaluation tags for the shop and that is to be displayed at the first terminal; delivering the evaluation tag information to the first terminal; acquiring, from the first terminal, information indicating a third evaluation tag selected by the first user from among the at least one second evaluation tag; associating and storing user information of the first user, the payment information and the third evaluation tag in the one or more memories; delivering, to a shop terminal of the shop, statistical information including the number of users who have selected each of the plurality of first evaluation tags for a predetermined period from among the plurality of users; acquiring, from the shop terminal, information indicating a customer management message and a coupon to be sent to at least one second user who has selected the third evaluation tag among the plurality of users; and delivering the information indicating the customer management message and the coupon to a second terminal of the at least one second user.

In an embodiment, each of the plurality of first evaluation tags includes a positive evaluation or a negative evaluation on one category selected from among a quality level, a price level, a service level and an atmosphere of the shop.

In an embodiment, generating the evaluation tag information includes: generating the evaluation tag information including a first evaluation tag group and a second evaluation tag group, wherein the first evaluation tag group includes an evaluation tag to be displayed at the first terminal among the at least one second evaluation tag according to an input, to the first terminal by the first user, that indicates the first user is willing to return to the shop, and wherein the second evaluation tag group includes an evaluation tag to be displayed at the first terminal among the at least one second evaluation tag according to an input, to the first terminal by the first user, that indicates the first user is not willing to return to the shop.

In an embodiment, generating the evaluation tag information further includes: determining an average value of amounts that have been paid by the plurality of users based on payment history information of the plurality of users for the shop; comparing the average value to a first amount to be paid by the first user which is acquired from the payment information; upon determining that the first amount to be paid is smaller than the average value by a predetermined percentage or higher, adding an evaluation tag corresponding to a positive evaluation on the price level of the shop to the first evaluation tag group; and upon determining that the first amount to be paid is larger than the average value by the predetermined percentage or higher, adding an evaluation tag corresponding to a negative evaluation on the price level of the shop to the second evaluation tag group.

In an embodiment, generating the evaluation tag information further includes: determining whether a reception time when the payment information is acquired from the first terminal is within a predetermined time interval in business hours of the shop; upon determining that the reception time is not within the time interval, adding an evaluation tag corresponding to a positive evaluation on the atmosphere and the service level of the shop to the first evaluation tag group; and upon determining that the reception time is within the time interval, adding an evaluation tag corresponding to a negative evaluation on the atmosphere and the service level of the shop to the second evaluation tag group.

In an embodiment, acquiring the information indicating the customer management message and the coupon includes: determining at least one recommended message and at least one recommended coupon that correspond to the third evaluation tag and that are to be displayed at the shop terminal; delivering information indicating the at least one recommended message and the at least one recommended coupon to the shop terminal; and acquiring, from the shop terminal, information indicating the customer management message selected from among the at least one recommended message, and information indicating the coupon selected from among the at least one recommended coupon.

In an embodiment, determining the at least one recommended message and the at least one recommended coupon includes: when the third evaluation tag is an evaluation tag corresponding to a negative evaluation on the price level of the shop, determining a price discount coupon for the shop for each discount rate as the at least one recommended coupon, and determining the each discount rate for the price discount coupon in proportion to the ratio of the number of users who have selected the third evaluation tag to the plurality of users.

In an embodiment, the method further includes: acquiring, from the shop terminal, designated-user determination information including at least one of a payment number condition, a payment amount condition and a payment frequency condition of designated users for the shop; determining at least one of the plurality of users as the designated users for the shop based on payment history information for the shop of the plurality of users and the designated-user determination information; delivering information indicating the number of the designated users to the shop terminal; acquiring, from the shop terminal, designated-user benefit information indicating a benefit to be provided to the designated users; and delivering, to terminals of the designated users, information for displaying the benefit and information for generating an image indicating that a corresponding user is one of the designated users based on the designated-user benefit information.

In one aspect of the present disclosure, a non-transitory computer-readable recording medium that stores commands for customer management may be proposed. The commands that are stored in the recording medium according to an aspect of the present disclosure and that cause one or more processors to perform an operation when the commands are executed by the one or more processors in a server for managing a plurality of users who make payments in a shop may include: processing a payment by a first user among the plurality of users based on payment information acquired from a first terminal of the first user; generating evaluation tag information including at least one second evaluation tag that is selected from among a plurality of first evaluation tags for the shop and that is to be dispalyed at the first terminal; delivering the evaluation tag information to the first terminal; acquiring, from the first terminal, information indicating a third evaluation tag selected by the first user from among the at least one second evaluation tag; associating and storing user information of the first user, the payment information and the third evaluation tag in the one or more memories;
delivering, to a shop terminal of the shop, statistical information including the number of users who have selected each of the plurality of first evaluation tags for a predetermined period from among the plurality of users; acquiring, from the shop terminal, information indicating a customer management message and a coupon to be sent to at least one second user who has selected the third evaluation tag among the plurality of users; and delivering the information indicating the customer management message and the coupon to a second terminal of the at least one second user.

### BRIEF DESCRIPTION OF DRAWINGS

The accompanying drawings, which are incorporated in and constitute a part of the specification, illustrate embodiments of the present disclosure.
FIG. 1 is a diagram showing an embodiment of a process in which a server operates according to the present disclosure.
FIG. 2 shows a block diagram of a server according to various embodiments of the present disclosure.
FIG. 3 is a diagram showing an evaluation tag displayed at a terminal of a user according to an embodiment of the present disclosure.
FIG. 4 is a diagram showing a process of generating evaluation tag information based on payment history information according to an embodiment of the present disclosure.
FIG. 5 is a diagram showing a process of generating evaluation tag information based on a pre-selected evaluation tag or a payment request time originating from a first user according to an embodiment of the present disclosure.
FIG. 6 is a diagram showing a process of recommending a customer management message or a coupon for customer management to a shop terminal according to an embodiment of the present disclosure.
FIG. 7 is a diagram showing statistical information, a recommended message, and a recommended coupon according to an embodiment of the present disclosure.
FIG. 8 is a diagram showing information indicating a coupon usage status according to an embodiment of the present disclosure.
FIG. 9 is a diagram showing a process of determining a designated user for a shop and providing a benefit to the designated user according to an embodiment of the present disclosure.
FIG. 10 is a diagram showing designated-user determination information and designated-user benefit information according to an embodiment of the present disclosure.
FIG. 11 is a diagram showing an image indicating that a corresponding user is a designated user according to an embodiment of the present disclosure.
FIG. 12 is a diagram showing a process in which a server, a shop terminal, and user terminals operate in a situation where several people have a meal together and pay for the meal according to an embodiment of the present disclosure.
FIG. 13 is a diagram showing an embodiment of a customer management method that may be performed by a server according to the present disclosure.

### DETAILED DESCRIPTION

Various embodiments disclosed herein are illustrated for the purpose of clearly describing the technical scope of the present disclosure and are not intended to limit the present disclosure to specific embodiments. The technical scope of the present disclosure encompasses various modifications, equivalents, alternatives, and/or selective combinations of some or all of the embodiments disclosed herein. Also, the technical scope of the present disclosure is not limited to the following various embodiments or the detailed description thereof.

The terms used herein, including technical or scientific terms, may have meanings that are generally understood by a person having ordinary knowledge in the art to which the present disclosure pertains, unless otherwise specified.

The expressions "include," "may include," "be provided with," "may be provided with," "have," "may have," and the like used herein indicate the existence of a corresponding feature (e.g., a function, an operation, or an element) and do not exclude the existence of an additional feature. That is, such expressions should be understood as open-ended terms connoting the possibility of inclusion of other embodiments.

A singular expression used herein can include meanings of plurality, unless otherwise mentioned, and the same is applied to a singular expression recited in the claims.

Unless otherwise mentioned, the terms "1st," "2nd," "first," "second," etc. used herein are used to differentiate a plurality of homogeneous components from one another and are not intended to limit the order or importance of the relevant components.

The expressions "A, B, and C," "A, B, or C," "A, B, and/or C," "at least one of A, B, and C," "at least one of A, B, or C," "at least one of A, B, and/or C," "at least one selected from among A, B, and C," "at least one selected from among A, B, or C," "at least one selected from among A, B, and/or C," and the like used herein may denote the listed items or all possible combinations thereof. For example, the expression "at least one selected from A's and B's" may refer to all of (a) A's, (b) at least one of A's, (3) B's, (4) at least one of B's, (5) at least one of A's and at least one of B's, (6) B's and at least one of A's, (7) A's and at least one of B's, and (8) A's and B's.

The expression "based on" used herein is used to describe one or more factors that influence a decision, an action of judgment, or an operation described in a phrase or sentence including the relevant expression, and this expression does not exclude an additional factor influencing the decision, the action of judgment, or the operation.

The expression "an element (e.g., first element) is coupled or connected to another element (e.g., second element)" used herein means that the first element may be coupled or connected directly to the second element or that still another element (e.g., third element) may be interposed between the two elements.

The expression "configured to" used herein may have meanings such as "set to," "having the capacity to," "changed to," "made to," "capable of," and the like according to the context. The expression "configured to" may not necessarily mean only "specifically designed to in hardware." For example, a processor configured to perform a specific operation may mean a general-purpose processor capable of performing the specific operation by executing software.

The term "mean" used herein may refer to a value obtained by adding up the values of all the samples and then dividing the sum by the total number of samples. The term "median" used herein may refer to the middle value among the values of all the samples. The values of the samples are sorted in ascending order. At this time, the middle value may be determined as the median when the number of samples is odd, and the mean of two middle values may be determined as the median when the number of samples is even. The term "mode" used herein may refer to a value that appears most often among the values of the samples.

Hereinafter, various embodiments of the present disclosure will be described with reference to the accompanying drawings. In the accompanying drawings and the description thereof, like reference numerals may be assigned to the same or substantially equivalent components. In the following description of the various embodiments, repeated descriptions of the identical or relevant components will be omitted. However, the components are not intended to be excluded in the corresponding embodiments.

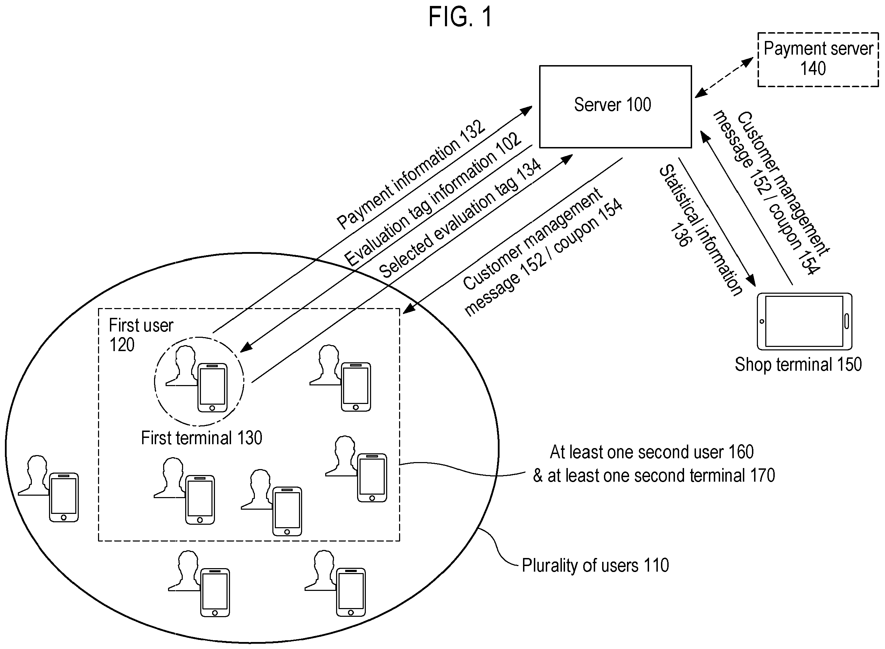

FIG. 1 is a diagram showing an embodiment of a process in which a server 100 operates according to the present disclosure. The server 100 according to the present disclosure may be implemented in various embodiments. The server 100 according to the various embodiments of the present disclosure may manage customers (hereinafter referred to as a plurality of users 110) who have made payments in a shop (e.g., a restaurant). In an embodiment, the server 100 may process a user's payment, provide evaluation tags for the shop to the corresponding user, store an evaluation tag selected by the corresponding user, and deliver evaluation tags selected by the users to a shop terminal 150.

Specifically, the server 100 may process a payment by one user (hereinafter referred to as a first user 120) in the shop. The first user 120 may be one of the plurality of users 110. In an embodiment, some of the plurality of users 110 may be users who have eaten a meal in the corresponding shop together with the first user 120, and have paid their shares of the payment for the meal. A terminal (hereinafter referred to as a first terminal 130) of the first user 120 may deliver payment information 132 to the server 100. The server 100 may process a payment by the first user 120 based on the payment information 132. In the present disclosure, the payment information 132 may include an amount to be paid by a user and/or additional information for performing a payment by the corresponding user. The server 100 may perform the payment through communication with a payment server 140 if necessary. The payment processing process will be described below.

The server 100 may generate evaluation tag information 102. The evaluation tag information may include at least one evaluation tag (hereinafter referred to as a second evaluation tag) selected from among a plurality of evaluation tags (hereinafter referred to as first evaluation tags) for evaluating the shop. An evaluation tag may be information that includes a string of words describing evaluation of the shop. The second evaluation tag is an evaluation tag for evaluating the corresponding shop, and may be displayed at the first terminal 130. For example, the server 100 may select at least one second evaluation tag from among a plurality of first evaluation tags based on a tendency of the first user 120, and may generate the evaluation tag information 102 using the selected at least one second evaluation tag. The process of generating the evaluation tag and the evaluation tag information 102 will be described below.

The server 100 may deliver the evaluation tag information 102 to the first terminal 130. The at least one second evaluation tag may be displayed at the first terminal 130 based on the evaluation tag information 102. The first user 120 may select at least one evaluation tag (hereinafter referred to as a third evaluation tag) from among the at least one second evaluation tag, and may enter the at least one third evaluation tag into the first terminal 130. That is, the first user 120 who has completed his or her payment may select an evaluation tag that is considered to properly represent the corresponding shop from among the displayed evaluation tags in order to evaluate the corresponding shop.

The first terminal 130 may deliver information 134 indicating the selected at least one third evaluation tag to the server 100. The server may acquire the corresponding information 134, and associate and store user information of the first user 120, the payment information 132 of the first user 120, and/or the selected at least one third evaluation tag in a memory. In the present disclosure, user information is for identifying a corresponding user and may include information indicating the corresponding user. In an embodiment, the user information may be a name, phone number, ID, code assigned to the corresponding user, or the like. In this way, the server 100 may collect evaluation tags from the plurality of users 110 and store the collected evaluation tags. Thus, the server 100 may store information indicating how the users made payments in the shop and how the users evaluated the shop after the corresponding payments.

The server 100 may deliver statistical information 136 regarding evaluation tags stored for a predetermined period to the shop terminal 150. The statistical information 136 may be information indicating statistics on the evaluation tags selected and stored during the predetermined period by the plurality of users 110. The statistical information 136 may indicate the number of users who have selected each of the plurality of first evaluation tags from among the plurality of users 110 for a predetermined period. In an embodiment, the predetermined period may be one business day, one fiscal quarter, one year or the like. In the present disclosure, the shop terminal 150 may be a terminal or an electronic device possessed by an owner of the shop or an electronic device provided in the corresponding shop in order to manage the plurality of users 110 according to a customer management technique according to the present disclosure. For example, the shop terminal 150 may be a portable communication device (e.g., a smartphone), a computer device (e.g., a tablet PC, a laptop, a desktop, or the like), a portable multimedia device, a point of sale (POS) device, or a device corresponding to a combination of two or more of the aforementioned devices.

The shop terminal 150 may display the statistical information 136. The owner or clerk of the corresponding shop may select any one tag (e.g., the third evaluation tag) from among the plurality of first evaluation tags based on the displayed statistical information 136. Also, the owner or clerk may select a customer management message 152 and/or a coupon 154 to be sent to a user (hereinafter referred to as the at least one second user 160) who has selected the corresponding evaluation tag (e.g., the third evaluation tag) among the plurality of users 110. The selection of the owner or clerk may be input to the shop terminal 150. According to the input from the owner or clerk, the shop terminal 150 may deliver, to the server 100, information indicating the customer management message 152 and/or coupon 154 to be delivered to the second user who has selected the corresponding evaluation tag (e.g., the third evaluation tag).

When the information indicating the customer management message 152 and/or the coupon 154 is acquired, the server 100 may deliver the information indicating the customer management message 152 and/or the coupon 154 to a terminal (hereinafter referred to as a second terminal 170) of the at least one second user 160. The customer management message 152 and/or the coupon 154 may be displayed at the second terminal 170. In this way, for a customer who has visited the shop, the shop may perform follow-up customer management.

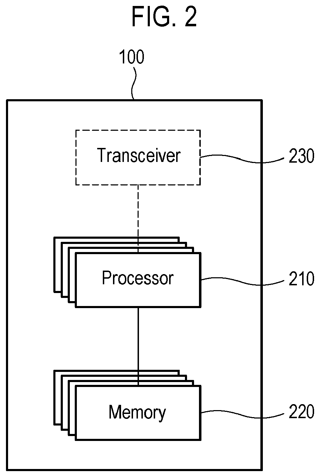

FIG. 2 shows a block diagram of the server 100 according to various embodiments of the present disclosure. In an embodiment, the server 100 may include one or more processors 210 and/or one or more memories 220. In an embodiment, at least one of the components of the server 100 may be omitted, or another component may be added to the server 100. In an embodiment, additionally or alternatively, some of the components may be integrated or may be implemented as a single entity or a plurality of entities. In the present disclosure, the one or more processors 210 may be expressed as a processor 210. The expression "processor 210" may refer to a set of one or more processors unless the context clearly indicates otherwise. In the present disclosure, the one or more memories 220 may be expressed as a memory 220. The expression "memory 220" may refer to a set of one or more memories unless the context clearly indicates otherwise. In an embodiment, the components inside or outside the server 100 may be connected to each other through a bus, a general-purpose input/output (GPIO), a serial peripheral interface (SPI), or a mobile industry processor interface (MIPI), or the like to transmit and receive data and/or signals.

The one or more processors 210 may drive software (e.g., a command, a program, etc.) to control at least one component of the server 100 connected to the corresponding processors 210. Also, such a processor 210 may perform various operations associated with the present disclosure, such as operation, data generation, and processing. Also, the processor 210 may load data or the like from a corresponding memory 220 or may store the data or the like in a corresponding memory 220.

The processor 210 may process a payment by the first user 120 based on the above-described payment information 132 acquired from the first terminal 130. The processor 210 may generate evaluation tag information 102 and deliver the evaluation tag information 102 to the first terminal 130. The processor 210 may acquire information indicating a third evaluation tag selected by the first user 120 from the first terminal 130, and may associate and store the user information of the first user 120, the payment information 132 of the first user 120, and/or the third evaluation tag in the memory 220. The processor 210 may deliver the above-described statistical information 136 to the shop terminal 150, and may acquire, from the shop terminal 150, information indicating the customer management message 152 and the coupon 154 to be sent to the second user 160. The processor 210 may deliver the information indicating the customer management message 152 and/or the coupon 154 to the second terminal 170.

The one or more memories 220 may store a various types of data. The data stored in such a memory 220 is data acquired, processed, or used by at least one component of the server 100 and may include software (e.g., a command, a program, etc.). The memory 220 may include a volatile and/or nonvolatile memory. In the present disclosure, the command or program is software stored in the memory 220 and may include an operating system for controlling resources of the server 100, applications, and/or middleware for providing various functions to the applications so that the applications can utilize the server resources. The memory 220 may store commands for causing the one or more processors 210 to perform operation when the commands are executed by the one or more processors 210. Also, the memory 220 may store the payment information 132, the first evaluation tag, the second evaluation tag, the third evaluation tag, the evaluation tag information 102, the statistical information 136, the information indicating the coupon 154, the information indicating the payment information, and the like.

In an embodiment, the server 100 may further include a transceiver 230. The transceiver 230 may perform wireless or wired communication between the server 100 and the terminals, between the server 100 and the payment server 140, or between the server 100 and the shop terminal 150. For example, the transceiver 230 may perform wireless communication according to enhanced Mobile Broadband (eMBB), Ultra Reliable Low-Latency Communications (URLLC), Massive Machine Type Communications (MMTC), long-term evolution (LTE), LTE Advance (LTE-A), New Radio (NR), Universal Mobile Telecommunications System (UMTS), Global System for Mobile Communications (GSM), code division multiple access (CDMA), wideband CDMA (WCDMA), Wireless Broadband (WiBro), WiFi, Bluetooth, near field communication (NFC), Global Positioning System (GPS), global navigation satellite system (GNSS), or the like. For example, the transceiver 230 may perform wired communication according to Universal Serial Bus (USB), high definition multimedia interface (HDMI), recommended standard232 (RS-232), plain old telephone service (POTS), or the like. In an embodiment, the processor 210 may control the transceiver 230 to communicate with the terminals, the payment server 140, and the shop terminal 150. Information acquired from the devices other than the server 100 may be stored in the memory 220.

The various embodiments of the server 100 according to the present disclosure may be combined with one another. The embodiments may be combined to create alternative embodiments according to the number of cases, and the embodiments of the server 100 created through the combination may also fall within the scope of the present disclosure. Also, the above-described internal or external components of the server 100 according to the present disclosure may be added, changed, or deleted depending on the embodiment. Also, the above-described internal/external components of the server 100 may be implemented as hardware components.

The user terminal (e.g., the first terminal 130, the second terminal 170, etc.) may include one or more processors and/or one or more memories. The one or more memories may store commands for causing the one or more processors to perform operation when the commands are executed by the one or more processors. The one or more processors of the user terminal may perform operations corresponding to the above-described operation of the server 100 according to the customer management technique according to the present disclosure. In an embodiment, the user terminal may further include an input device and/or an output device. The input device is a device for receiving data from a user and may include, for example, a touch screen, a key board, a button, and the like. The output device is a device for visually providing various types of data processed by the user terminal to the user and may include, for example, a touch screen, a display screen, and the like. In the present disclosure, the terminal used by the user may be various forms of devices. For example, the terminal may be a portable communication device (e.g., a smartphone), a computer device (e.g., a tablet PC, a laptop, or the like), a portable multimedia device, a wearable device, or a device corresponding to a combination of one or more of the above-described devices.

The shop terminal 150 may include one or more processors and/or one or more memories. The one or more memories may store commands for causing the one or more processors to perform operation when the commands are executed by the one or more processors. The one or more processors of the shop terminal 150 may perform operations corresponding to the above-described operation of the server 100 according to the customer management technique according to the present disclosure. In an embodiment, the shop terminal 150 may further include an input device and/or an output device. The input device and the output device are as described above.

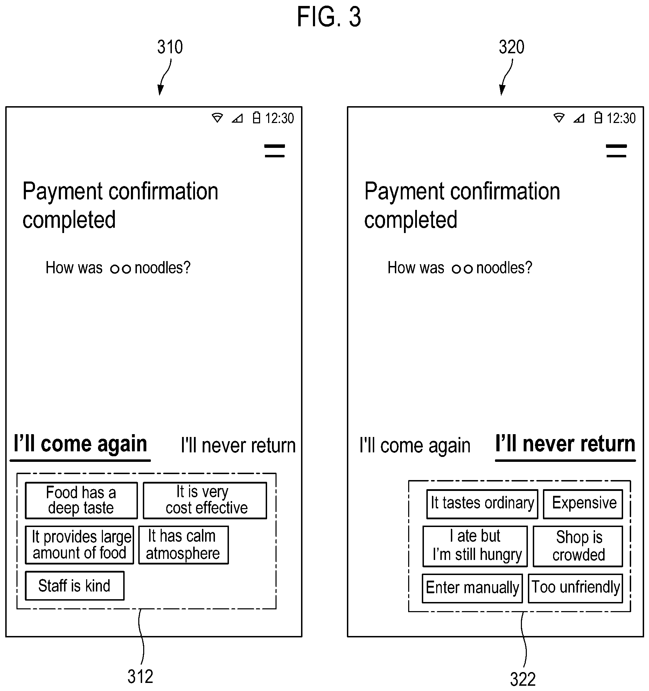

FIG. 3 is a diagram showing an evaluation tag (e.g., at least one second evaluation tag) displayed at a user terminal (e.g., the first terminal 130) according to an embodiment of the present disclosure. As described above, the server 100 may select at least one second evaluation tag from among a plurality of first evaluation tags for evaluating the shop, and may generate the evaluation tag information 102.

In the present disclosure, the evaluation tag (e.g., the first evaluation tag) may be information that includes a string of words describing evaluation of the shop. The corresponding string may describe a positive or negative evaluation on various evaluation categories of the shop. The evaluation categories of the shop may include, for example, the quality level, the price level, the service level, and the atmosphere of the shop. The quality level of the shop may be, for example, an evaluation category for the taste, ingredients, quantity, and the like of food (or menus) being sold in the shop. The price level of the shop may be, for example, an evaluation category for the price of food sold in the shop, the price of the shop relative to those of nearby shops, and the like. The service level of the shop may be an evaluation category for how kind the owner or clerk of the shop is (i.e., kindness). The atmosphere of the shop may be an evaluation category for how crowded the shop is (i.e., crowdedness), the flow of the crowd in the shop, the distance between shop tables, or subjective factors such as ease, comfort, familiarity, and awkwardness of the shop, and may also be an evaluation category for the interior design of the shop or the noise or music in the shop. Depending on the embodiment, the evaluation categories of the shop may be set in various ways.

In an embodiment, each of the plurality of first evaluation tags may include a positive evaluation or a negative evaluation on one category selected from among the quality level, the price level, the service level, and the atmosphere of the corresponding shop. For example, the first evaluation tag may have a string such as "Food has a deep taste" (a positive evaluation on the quality level), "Staff is kind" (a positive evaluation on the service level), "Expensive" (a negative evaluation on the price level), and "Shop is crowded" (a negative evaluation on the atmosphere).

As described above, the processor 210 of the server 100 may generate the evaluation tag information 102 including the at least one second evaluation tag. In an embodiment, the evaluation tag information 102 may include a first evaluation tag group and a second evaluation tag group. The first evaluation tag group may include an evaluation tag to be displayed at the first terminal 130 among the second evaluation tags, according to an input, to a first terminal 130 by a first user 120, that the first user 120 is willing to return to the shop. The second evaluation tag group may include an evaluation tag to be displayed at the first terminal 130 among the second evaluation tags, according to an input, to a first terminal 130 by a first user 120, that the first user 120 is not willing to return to the shop.

Specifically, the first terminal 130 may receive the evaluation tag information 102 from the server 100. The first terminal 130 may display a screen that asks the first user 120 whether he or she is willing to return to the corresponding shop. For example, the first terminal 130 may display a button labeled "I'll come again," and a button labeled "I'll never return." In an embodiment, the first user 120 may enter, into the first terminal 130, that he or she is willing to return to the corresponding shop (e.g., select "I'll come again"). According to an input from the first user 120 that the first user 120 is willing to return to the shop, the first terminal 130 may display a screen 310 that shows evaluation tags 312 corresponding to the first evaluation tag group among the evaluation tag information 102. The displayed evaluation tag 312 may have a string representing a positive evaluation on a category selected from among the quality level, the price level, the service level, and the atmosphere of the shop. In an embodiment, the first user 120 may enter, into the first terminal 130, that he or she is not willing to return to the corresponding shop (e.g., select "I'll never return"). According to an input from the first user 120 that the first user 120 is not willing to return to the corresponding shop, the first terminal 130 may display a screen 320 that shows evaluation tags 322 corresponding to the second evaluation tag group among the evaluation tag information 102. The displayed evaluation tag 322 may have a string representing a negative evaluation on a category selected from among the quality level, the price level, the service level, and the atmosphere of the shop.

In an embodiment, the first terminal 130 may maintain the screen 310 or the screen 320 for selecting the evaluation tags until the first user 120 selects at least one third evaluation tag from among the at least one second evaluation tag displayed at the first terminal 130.

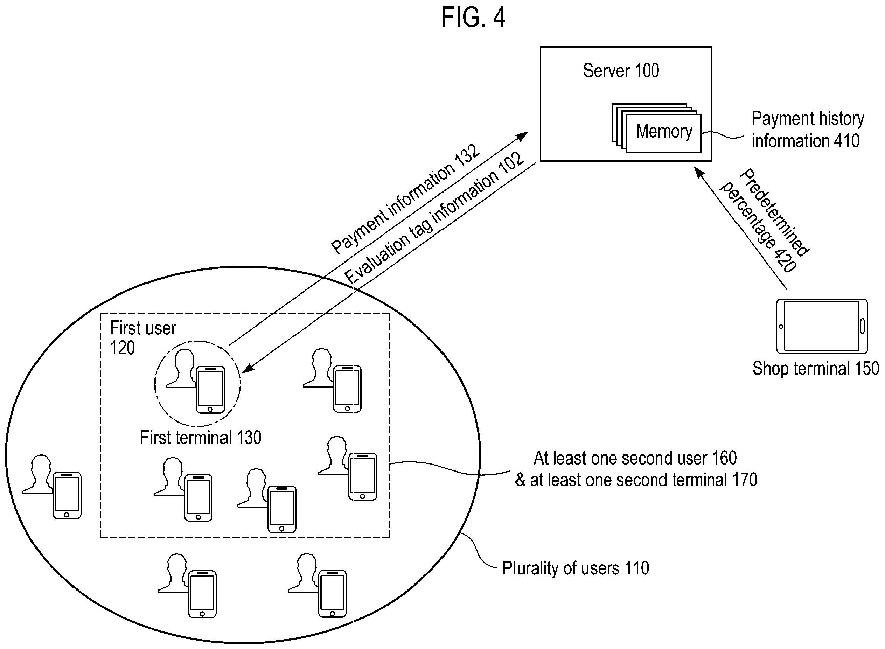

FIG. 4 is a diagram showing a process of generating evaluation tag information 102 based on payment history information 410 according to an embodiment of the present disclosure. In an embodiment, the server 100 may find information indicating a payment made by the first user 120 based on the payment history information 410 of the plurality of users 110. The server 100 may select at least one second evaluation tag to be displayed at the first terminal 130 of the first user 120. The server 100 may generate the evaluation tag information 102. By displaying an evaluation tag related to a payment made by a user at a terminal of the user, the user may easily select an evaluation tag representing what he or she thinks about the shop. As a result, it is possible to reduce fatigue that the user may feel in the process of collecting the VoC.

Specifically, the processor 210 may acquire the payment history information 410 of the plurality of users 110 for the shop. The payment history information 410 may be stored in the memory 220 of the server 100. In an embodiment, the payment history information 410 may include information indicating payments that have been made by the plurality of users 110 in the shop. For example, the payment history information 410 may include information indicating each amount that has been paid by each of the plurality of users, each payment request time thereof, total amounts that have been paid by a group of users who have eaten together, the number of a table of the shop where the group have eaten together, etc.

The processor 210 may determine the average value of the amounts that have been paid by the plurality of users 110 based on the payment history information 410 of the plurality of users 110. Also, the processor 210 may acquire information indicating the amount to be paid by the first user (hereinafter referred to as a first amount to be paid) from the payment information 132 acquired from the first terminal 130. The processor 210 may compare the determined average value to the first amount to be paid.

When it is determined that the first amount to be paid is smaller than the determined average value by a predetermined percentage 420 or more, the processor 210 may add an evaluation tag corresponding to a positive evaluation on the price level of the shop to the first evaluation tag group, in the process of generating the evaluation tag information 102. This is because the first user 120 is more likely to select an evaluation tag corresponding to a positive evaluation on the price level of the shop, when the first amount to be paid is somewhat lower than the average value of the amounts that have been paid by the plurality of users 110. For example, it is assumed that the average value of the amounts that have been paid is 20,000 KRW and the predetermined percentage 420 is 30%. When the first amount is less than or equal to 14,000 KRW, an evaluation tag such as "It is very cost effective" and "Price is reasonable" may be added to the first evaluation tag group.

When it is determined that the first amount to be paid is larger than the determined average value by the predetermined percentage 420 or more, the processor 210 may add an evaluation tag corresponding to a negative evaluation on the price level of the shop to the second evaluation tag group, in the process of generating the evaluation tag information 102. This is because the first user 120 is more likely to select an evaluation tag corresponding to a negative evaluation on the price level of the shop, when the first amount to be paid is somewhat higher than the average value of the amounts that have been paid by the plurality of users. For example, in the case where the average value of the amounts that have been paid is 20,000 KRW and the predetermined percentage 420 is 20%, if the first amount to be paid is greater than or equal to 24,000 KRW, an evaluation tag such as "Expensive" may be added to the second evaluation tag group.

When the evaluation tag information 102 is generated according to the above-described process, the processor 210 may deliver the evaluation tag information 102 to the first terminal 130. In an embodiment, the processor 210 may acquire, from the shop terminal 150, information indicating the predetermined percentage 420 to be applied to the average value of the amounts that have been paid . The acquired information indicating the predetermined percentage 420 may be stored in the memory 220. In an embodiment, the percentage applied to the average value of the amounts that have been paid in order to add the evaluation tag to the first evaluation tag group and the percentage applied to the average value of the amounts that have been paid in order to add an evaluation tag to the second evaluation tag group may be set to be different from each other.

In an embodiment, the processor 210 may determine a median value or a mode other than the average value of the amounts that have been paid by the plurality of users 110, and may compare the median value or the mode to the first amount to be paid. According to the comparison result, as described above, an evaluation tag may be added to the first evaluation tag group or the second evaluation tag group.

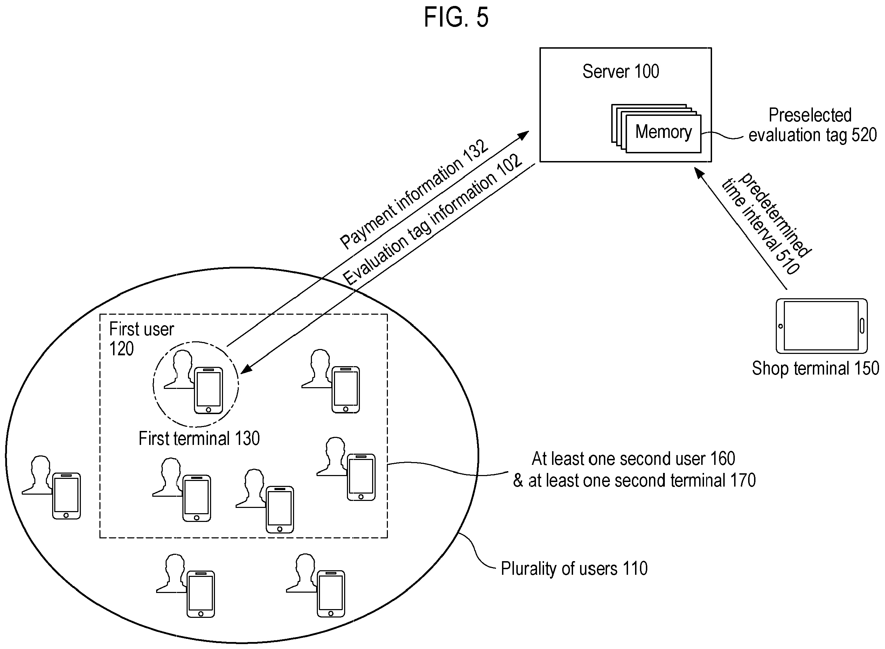

FIG. 5 is a diagram showing a process of generating the evaluation tag information 102 based on a pre-selected evaluation tag or a payment request time originating from the first user 120 according to an embodiment of the present disclosure. In an embodiment, the server 100 may generate the evaluation tag information 102 based on the payment request time originating from the first user 120. When the payment request time of the first user 120 (that is, a time when the payment information 132 is received) is within a time period during which the shop is crowded, the first user 120 is more likely to select an evaluation tag relating to the atmosphere of the shop. Thus, the server 100 may add the evaluation tag relating to the atmosphere of the shop to the evaluation tag information 102.

Specifically, the processor 210 of the server 100 may determine whether a reception time when the payment information 132 is acquired from the first terminal 130 is within a predetermined time interval 510. In an embodiment, the time interval 510 is a time interval corresponding to a crowded time period during the business hours of the shop. The time interval 510 may be predetermined by the shop. In an embodiment, the processor 210 may acquire information indicating the predetermined time interval 510 from the shop terminal 150, and may store the acquired information in the memory 220.

When it is determined that the reception time of the payment information 132 is not within the time interval 510, the processor 210 may add an evaluation tag corresponding to a positive evaluation on the service level and/or the atmosphere of the shop to the first evaluation tag group, in the process of generating the evaluation tag information 102. For example, when the predetermined time interval 510 includes 11:50-13:30 and 17:30-19:00 of every business day and the reception time of the payment information 132 is 15:00, an evaluation tag such as "Shop is comfortable" and "It has calm atmosphere" may be added to the first evaluation tag group.

When it is determined that the reception time of the payment information 132 is within the time interval 510, the processor 210 may add an evaluation tag corresponding to a negative evaluation on the service level and/or the atmosphere of the shop to the second evaluation tag group, in the process of generating the evaluation tag information 102. For example, when the predetermined time interval 510 includes 11:50-13:30 and 17:30-19:00 of every business day and the reception time of the payment information 132 is 12:15, an evaluation tag such as "Shop is crowded" may be added to the second evaluation tag group.

In an embodiment, the server 100 may generate the evaluation tag information 102 based on an evaluation tag 520 that the first user 120 previously selected for the shop. When the first user 120 previously selected the evaluation tag of a certain evaluation category (e.g., the price level) for the shop, the first user 120 is likely to be a user who is sensitive to the corresponding category (e.g., the price level). Thus, the server 100 may add the evaluation tag for the corresponding category to the evaluation tag information 102.

Specifically, the processor 210 of the server 100 may acquire an evaluation tag 520 that the first user 120 previously selected for the shop from the memory 220. The processor 210 may determine which of the quality level, the price level, the atmosphere, and the service level is described by the acquired evaluation tag 520 with the highest frequency. The processor 210 may add an evaluation tag corresponding to a positive evaluation on the determined evaluation category to the first evaluation tag group. Also, the processor 210 may add an evaluation tag corresponding to a negative evaluation on the determined evaluation category to the second evaluation tag group. For example, when the first user 120 previously selected an evaluation tag for the quality level (e.g., taste) of the shop with a high frequency, the first user 120 may be a user who is sensitive to the quality level (e.g., taste). Accordingly, the processor 210 may add the evaluation tag corresponding to the positive evaluation on the quality level (e.g., "Food has a deep taste") to the first evaluation tag group, and may add the evaluation tag corresponding to the negative evaluation on the quality level (e.g., "It tastes ordinary") to the second evaluation tag group.

In an embodiment, the processor 210 may determine an evaluation category selected with the highest frequency in consideration of not only the evaluation tags previously selected for the shop by the first user 120 but also evaluation tags selected for other shops.

When the evaluation tag information 102 is generated based on a previously selected evaluation tag or a payment request time originating from the first user 120 according to the above-described process, the processor 210 may deliver the corresponding evaluation tag information 102 to the first terminal 130.

In an embodiment, the server 100 may generate the evaluation tag information 102 by reflecting the characteristics of the shop. For example, when the evaluation tag relating to the quality level (e.g., food taste) of the shop exposed to a user in the VoC collection process contains content that has nothing to do with food being actually sold in the corresponding shop, the user may feel confused or fatigued. Such fatigue can be reduced in the process of collecting the VoC by the server 100 selecting the evaluation tag and generating the evaluation tag information 102 based on the characteristics of the corresponding shop (e.g., the type of food being sold in the corresponding shop).

Specifically, the processor 210 of the server 100 may acquire shop characteristics information indicating the characteristics of the shop from the shop terminal 150. In an embodiment, the shop characteristics information indicates various characteristics of the shop. The shop characteristics information may include information indicating the type of food being sold in the shop, the location of the shop, the main customer base of the shop, menu information for the shop, the business hours of the shop, and whether the shop sells alcohol. In an embodiment, the processor 210 may store the shop characteristics information of the shop in the memory 220. In an embodiment, when the payment information 132 is acquired from the first terminal 130, the processor 210 may request and acquire the shop characteristics information of the shop from the shop terminal 150.

In the process of generating the evaluation tag information 102, the processor 210 may add the evaluation tag to the first evaluation tag group or the second evaluation tag group based on the shop characteristics information for the shop. For example, the processor 210 may determine that the shop sells soup dishes (e.g., soup, stew, etc.) based on the shop characteristics information. In this case, when an evaluation tag corresponding to a positive evaluation on the quality level (e.g., food taste) of the shop is added to the first evaluation tag group, the processor 210 may add an evaluation tag indicating a positive evaluation related to soup dishes (e.g., "Food has a deep taste") to the first evaluation tag group. Also, for example, the processor 210 may determine that the shop sells noodle dishes (e.g., Naengmyon, noodles, etc.) based on the shop characteristics information. In this case, when an evaluation tag corresponding to a negative evaluation on the quality level (e.g., food taste) of the shop is added to the second evaluation tag group, the processor 210 may add an evaluation tag indicating a negative evaluation related to noodle dishes (e.g., "The noodles are overcooked") to the second evaluation tag group.

When the evaluation tag information 102 is generated based on the shop characteristics information originating from the shop terminal 150 according to the above-described process, the processor 210 may deliver the corresponding evaluation tag information 102 to the first terminal 130.

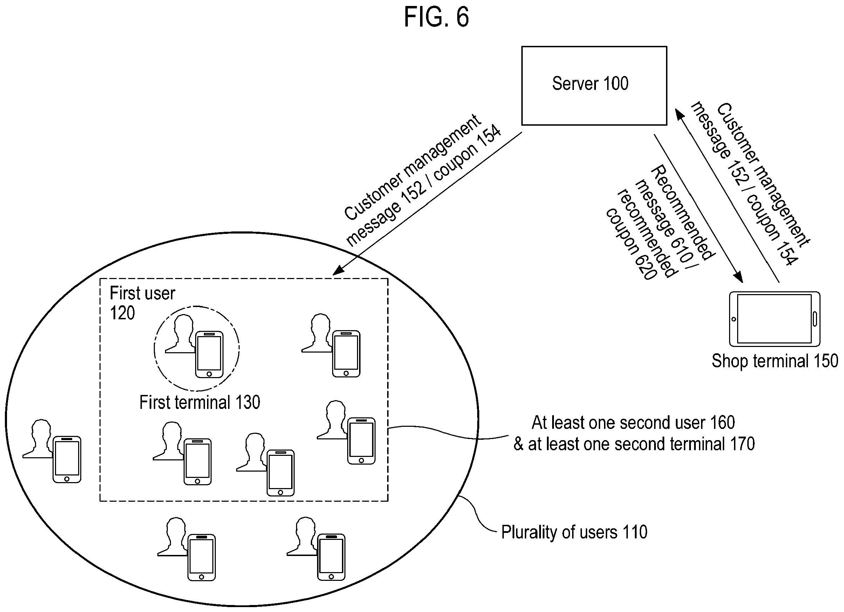

FIG. 6 is a diagram showing a process of recommending a customer management message 152 or a coupon 154 for customer management to a shop terminal 150 according to an embodiment of the present disclosure. As described above, the server 100 may acquire, from the shop terminal 150, information indicating the customer management message 152 and/or the coupon 154 to be sent to a user (e.g., a second user 160) who has selected a predetermined evaluation tag (e.g., a third evaluation tag). To this end, the server may deliver, to the shop terminal 150, a candidate group of the customer management message 152 and/or coupon 154 to be sent, and allow the owner or clerk of the shop to make a selection from the candidate group. Thus, it is possible to facilitate customer management at the shop side.

As described above, the processor 210 of the server 100 may deliver statistical information 136 to the shop terminal 150. The processor 210 may acquire any evaluation tag (e.g., a third evaluation tag) selected by the owner or clerk of the shop from the shop terminal 150. The selected evaluation tag may be any of a plurality of first evaluation tags. However, for convenience of description, it is assumed that the selected evaluation tag is a third evaluation tag.

Based on the third evaluation tag, the processor 210 may determine at least one recommended message 610 and/or at least one recommended coupon 620 to be displayed at the shop terminal 150. The recommended message 610 and/or the recommended coupon 620 may be related to the third evaluation tag. That is, the recommended message 610 may be a customer management message that describes an evaluation category indicated by the third evaluation tag. The recommended coupon 620 may be a coupon to be provided to a customer in relation to the evaluation category indicated by the third evaluation tag. The recommended message 610 and/or the recommended coupon 620 may be determined in various ways based on the third evaluation tag.

In an embodiment of a process of determining the recommended message 610 and/or the recommended coupon 620, if the third evaluation tag is an evaluation tag corresponding to a negative evaluation on the price level of the shop, the processor 210 may determine a price discount coupon for the shop for each discount rate as at least one recommended coupon 620. Also, the processor 210 may determine a message (e.g., We will give you a discount coupon for your next visit) to be sent to a customer in response to the negative evaluation on the price level as at least one recommended message 610. For example, the discount rate of the discount coupon may be determined to be 5%, 10%, or 15%. In an embodiment, the processor 210 may determine the discount rate in proportion to the ratio of the number of users who have selected the third evaluation tag to the number of users who have made payments in the shop (i.e., a plurality of users 110). For example, when the proportion of the number of users who have selected an evaluation tag corresponding to a negative evaluation on the price level is high, this means that most customers are dissatisfied with the price level of the shop. Accordingly, the processor 210 may recommend the shop terminal 150 to provide a recommended coupon 620 having a high discount rate.

According to the determination of the recommended message 610 and/or the recommended coupon 620, the processor 210 may deliver information indicating at least one recommended message 610 and/or at least one recommended coupon 620 to the shop terminal 150. The at least one recommended message 610 and/or the at least one recommended coupon 620 may be displayed at the shop terminal 150. The owner or clerk of the shop may select a customer management message 152 to be delivered to the second user 160 from among the at least one recommended message 610 displayed at the shop terminal 150. The owner or clerk may enter the selected customer management message 152 to the shop terminal 150. Also, the owner or clerk of the shop may select a coupon 154 to be delivered to the second user 160 from among the at least one recommended coupon 620 displayed at the shop terminal 150. The owner or clerk may enter the selected coupon 154 into the shop terminal 150.

The shop terminal 150 may deliver information indicating the selected customer management message 152 and/or coupon 154 to the server 100. The processor 210 may acquire the information indicating the customer management message 152 and/or the coupon 154. The processor 210 may deliver the acquired information to a second terminal 170 of at least one second user 160.

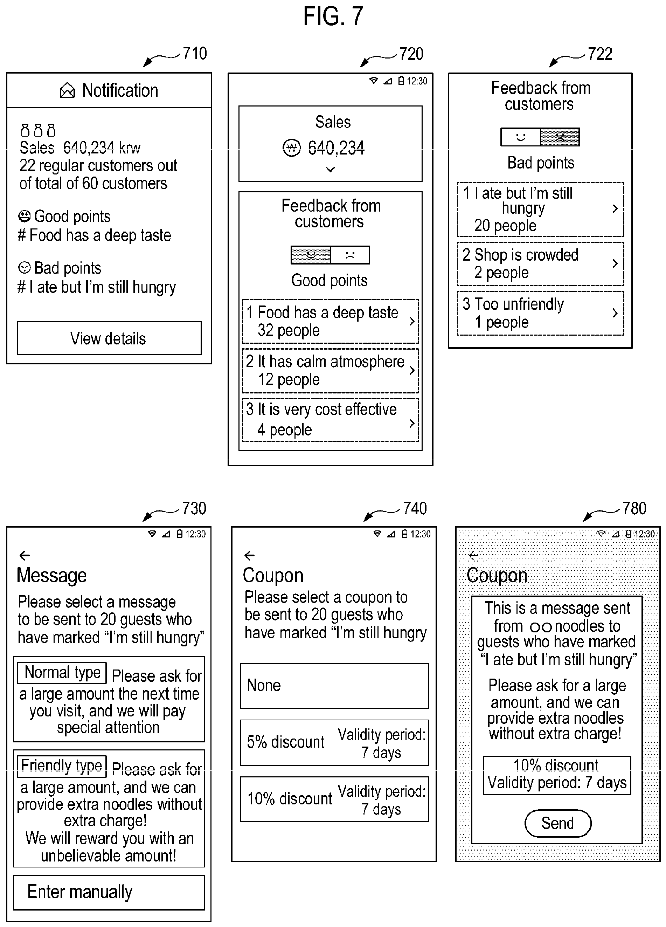

FIG. 7 is a diagram showing statistical information 136, a recommended message 610, and a recommended coupon 620 according to an embodiment of the present disclosure. In an embodiment, the statistical information 136 may indicate statistics on evaluation tags stored by users on a business day basis. In an embodiment, the statistical information 136 may be delivered to the shop terminal 150, which is a wireless terminal of the owner of the shop. In an embodiment, the statistical information 136 may indicate a total sales amount, the number of all the customers, the number of regular customers out of all the customers, and the like for a predetermined period (i.e., one business day).

Specifically, as described above, the statistical information 136 may indicate the number of users who have selected each of the plurality of first evaluation tags according to an evaluation tag 720 or 722 basis. For example, in the evaluation tag 720, the numbers of users who have selected positive evaluation tags for the shop, that is, "Food has a deep taste," "It has calm atmosphere," and "It is very cost effective" may be 32, 12, and 4, respectively (720). In the evaluation tag 722, the numbers of users who have selected negative evaluation tags for the shop, that is, "I ate but I'm still hungry," "The shop is crowded," and "Too unfriendly" may be 20, 2, and 1, respectively (722).

For example, the owner or clerk of the shop may select "I ate but I'm still hungry" (a negative evaluation on the quality level of the shop). The server 100 may deliver at least one recommended message 610 and/or at least one recommended coupon 620 corresponding to the corresponding evaluation tag to the shop terminal 150. The delivered information with evaluation tags 730 and 740 may be displayed at the shop terminal 150. The owner or clerk of the shop may select one of the displayed at least one recommended message 610 as the customer management message 152 to be sent to the second user 160 who has selected the corresponding evaluation tag 730. Also, the owner or clerk of the shop may select one of the displayed at least one recommended coupon 620 as the coupon 154 to be sent to the second user 160 who has selected the corresponding evaluation tag 740. The information indicating the customer management message 152 and/or coupon 154 selected by the shop terminal 150 may be delivered to the server 100, and the server may deliver the corresponding information to the second terminal 170. The customer management message 152 and/or the coupon 154 may be displayed at the second terminal 170.

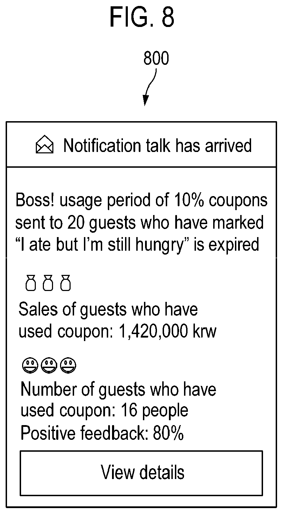

FIG. 8 is a diagram showing information indicating the usage status of the coupon 154 according to an embodiment of the present disclosure. In an embodiment, the server 100 may deliver, to the shop terminal 150, the information indicating the usage status of the coupon 154 delivered to the at least one second user 160.

Specifically, at the time when the coupon 154 delivered to the second user 160 expires, the processor 210 of the server 100 may generate information 800 indicating the usage status of the corresponding coupon 154 and deliver the generated information 800 to the shop terminal 150. The corresponding information 800 may indicate the number of users who have used the coupon 154 (hereinafter referred to as third users) among the at least one second user 160 who has received the coupon 154 (e.g., the number of customers who have used the coupon is 16). Also, the corresponding information 800 may indicate a sales amount generated in the shop by at least one third user (e.g., the sales amount of customers who have used a coupon is 1,420,000 KRW). In an embodiment, the processor 210 may acquire an evaluation tag selected after the at least one third user pays in the shop. Then the processor 210 may add an evaluation made regarding the shop by the third user to the information 800 indicating the usage status based on the acquired evaluation tag (e.g., the proportion of the positive feedback is 80%).

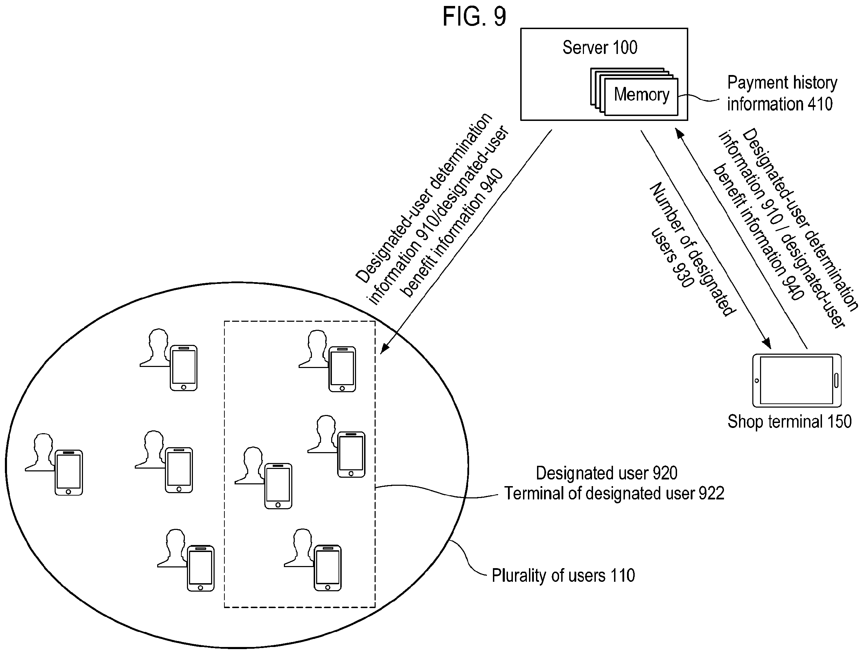

FIG. 9 is a diagram showing a process of determining a designated user for a shop and providing a benefit to the designated user according to an embodiment of the present disclosure. In an embodiment, the server 100 may determine some of a plurality of users 110 as regular users of the shop (hereinafter referred to as designated users 920). The corresponding shop may provide various benefits to the designated user 920 through the server 100 and may provide information for displaying, on a terminal 922 of the designated user 920, an image indicating that the designated user 920 is a regular user.

Specifically, the owner or clerk of the shop may enter designated-user determination information 910 into the shop terminal 150. The designated-user determination information 910 may include information indicating a condition for determining a user as a designated user. The designated-user determination information 910 may indicate a payment number condition, a payment amount condition, and/or a payment frequency condition which must be satisfied to designate a user as a designated user of the shop. The payment number condition may indicate the number of payments in the shop that must be satisfied by the user. The payment amount condition may indicate the total amount of payments made so far in the shop, which must be satisfied by the user. The payment frequency condition may indicate the frequency of payments in the shop, which must be satisfied by the user.

The shop terminal 150 may deliver the designated-user determination information 910 to the server 100. The processor 210 of the server 100 may acquire the designated-user determination information 910 and store the acquired designated-user determination information 910 in the memory 220. The processor 210 may determine at least one user as the designated user 920 of the shop based on the payment history information 410 of the plurality of users 110 and the designated-user determination information 910. That is, the processor 210 may acquire the payment history information 410 of the plurality of users 110 for the shop from the memory 220. The payment history information 410 may include information indicating the history of payments made in the shop through the server 100. The payment history information 410 may include user identification information for identifying users who have made payments in the shop, the number of times the corresponding users made payments, and information indicating a payment amount for each payment and/or a payment frequency. The processor 210 may compare the payment history information 410 with the designated-user determination information 910 and may determine a user having a payment history corresponding to the condition of the designated-user determination information 910 as a designated user 920.

The processor 210 may deliver information 930 indicating the number of designated users 920 to the shop terminal 150. The shop terminal 150 may display the number 930 of designated users 920, and the owner and clerk of the shop may enter designated-user benefit information 940 indicating benefits to be provided to the corresponding designate users 920 (e.g., beverage service, preferential entry, one side dish, etc.). The shop terminal 150 may deliver the designated-user benefit information 940 to the server 100.

Based on the designated-user benefit information 940, the processor 210 of the server 100 may deliver, to the terminals 922 of the designated users 920, information for displaying the benefits indicated by the designated-user benefit information 940, and information for generating an image indicating that the corresponding user is a designated user 920. When the corresponding information is acquired, each of the terminals 922 may display the corresponding benefits to the designated users 920. Also, based on the corresponding information, each of the terminals 922 may generate the image indicating that the corresponding user is the designated user 920, and may display the generated image to the designated user 920.

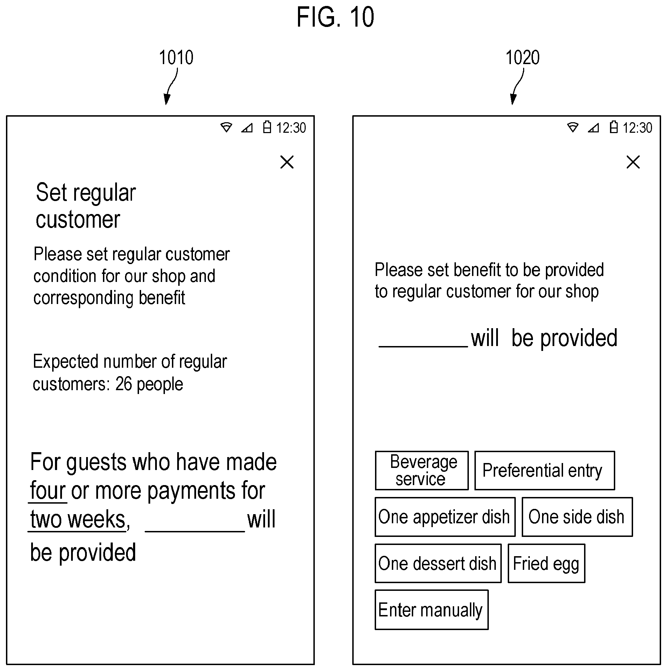

FIG. 10 is a diagram showing the designated-user determination information 910 and the designated-user benefit information 940 according to an embodiment of the present disclosure. The shop terminal 150 may display a screen 1010 for entering the designated-user determination information. Through this screen 1010, a condition (e.g., a user who made four payments in two weeks) for determining a designated user 920 may be input to the shop terminal 150. The server 100 may receive the designated-user determination information 910 and may deliver the expected number of users to be determined as the designated users 920 to the shop terminal 150 according to the condition. The shop terminal 150 may display the expected number of users to be determined as the designated users 920 (e.g., "Expected number of regular users is 26"). The shop terminal 150 may display a screen 1020 for entering the designated-user benefit information 940. A benefit to be provided to the designated user 920 (e.g., beverage service or the like) may be entered on the corresponding screen 1020.

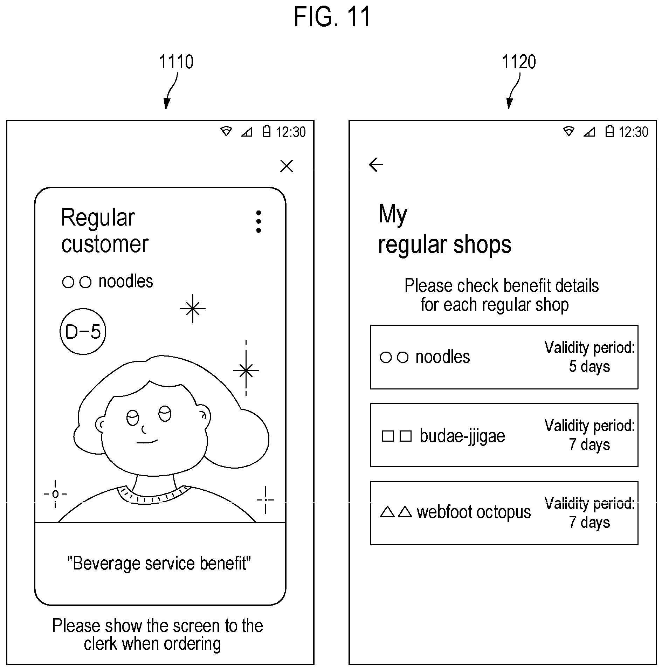

FIG. 11 is a diagram showing an image indicating that a corresponding user is a designated user 920 according to an embodiment of the present disclosure. As described above, the server 100 may deliver information, which is for generating an image 1110 indicating that the corresponding user is the designated user 920, to a terminal 922 of the designated user 920. The terminal 922 of the designated user 920 may display the image 1110 indicating that the corresponding user is the designated user 920 based on the corresponding information. The corresponding image 1110 may indicate for which shop (e.g., Jeongin Noodles) the user is a designated user 920 and may indicate what benefit (e.g., beverage service) is to be provided to the designated user 920. The designated user 920 may be easily recognized at the shop as the designated user 920 of the shop by presenting the corresponding image 1110. Also, the shop is able to clearly and easily identify a customer who is the designated user 920 of the shop, and doesn't have to go through the inconvenience of managing regular customers of the shop.

Also, the terminal 922 of the designated user 920 may display a list of shops for which he or she is determined as a designated user 920 (1120). The terminal 922 of the designated user 920 may display the list of shops and the time remaining until he or she maintains the status of the designated user in each shop. The time remaining until he or she maintains the status of the designated user may be determined based on designated-user determination information 910 determined by each shop. For example, a user may be able to maintain the status of the designated user by making a payment in the corresponding shop.

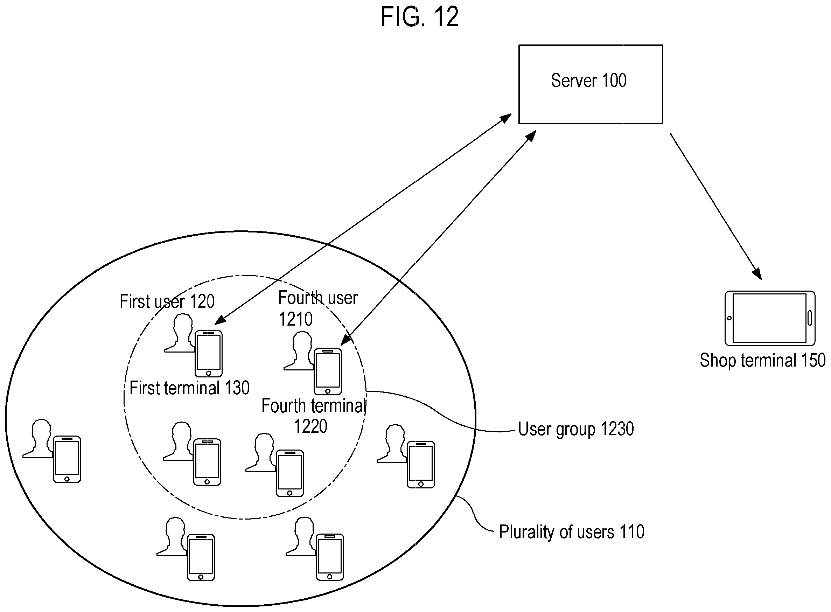

FIG. 12 is a diagram showing a process in which the server 100, the shop terminal 150, and user terminals operate in a situation where several people have a meal together and pay for the meal according to an embodiment of the present disclosure. As described above, the first user 120 may deliver his or her payment information 132 to the server 100 and may pay his or her first amount to be paid. The first user 120 may eat and make a payment alone in a shop. However, depending on the embodiment, the first user 120 may eat a meal together with other users and pay only a first amount to be paid which is his or her share of the total amount to be paid, which has been incurred by a user group 1230 including the first user 120.

Specifically, one user of the user group 1230 (hereinafter referred to as a fourth user 1210) may act as a so-called "cell leader" (*see* description below), and the other users may act as "participants" (*see* description below). Each of the users may have his or her user terminal. The first user 120 may be a participant.

The fourth user 1210 may enter, into his or her terminal (hereinafter referred to as a fourth terminal 1220), information indicating an identifier of the shop, an identifier of the user group 1230, a total amount to be paid which has been incurred by the user group 1230, identifiers of users belonging to the user group 1230, and an amount to be paid by the fourth user 1210 out of the total amount to be paid. In an embodiment, the identifier of the user group 1230 may be the number of a table where the user group 1230 has eaten in the shop. In an embodiment, the identifiers of the users belonging to the user group 1230 are user information of each user. The identifiers of the users may be the names, phone numbers, IDs, codes assigned to the users, or the like. The identifiers of the users belonging to the user group 1230 may include the identifier of the first user 120.

The fourth terminal 1220 may deliver input information to the server 100. The processor 210 of the server may approve the payment of the amount to be paid by the fourth user 1210. The payment approval process may be a process in which the processor 210 delivers information for approving the payment by the fourth user 1210 to a separate payment server 140, and receives a result of approving the payment from the payment server 140. When the payment by the fourth user 1210 is approved, the processor 210 may deliver, to the shop terminal 150 and the terminals of the users of the user group 1230, payment status information indicating a payment status for the total amount to be paid. That is, the processor 210 may deliver the payment status information to the first terminal 130 and the shop terminal 150.

Based on the payment status information, the first user 120 may enter, into the first terminal 130, a first amount to be paid which is his or her share of an unpaid amount out of the total amount to be paid. The first terminal 130 may deliver, to the server 100, payment information 132 indicating the first amount to be paid. The processor 210 may acquire the payment information 132, and approve the payment of the first amount to be paid by the first user 120. Along with the payment by the first user 120, the processor 210 may update the payment status information, and deliver the updated payment status information to the shop terminal 150 and the terminals of the users of the user group 1230. That is, the processor 210 may deliver the updated payment status information to the first terminal 130, the fourth terminal 1220, and the shop terminal 150.

When the payment of the total amount to be paid is completed in this manner, the processor 210 may deliver, to the shop terminal 150, a notification indicating the completion of the payment of the total amount to be paid. The shop terminal 150 may confirm the completion of the payment, and deliver, to the server 100, a notification indicating that the completion of the payment is confirmed. When the notification indicating that the payment is completed is acquired, the processor 210 of the server 100 may send, to the terminals of the user group 1230, a notification indicating that the payment is completed. The delivery of this notification may be accompanied by delivery of the above-described evaluation tag information 102.

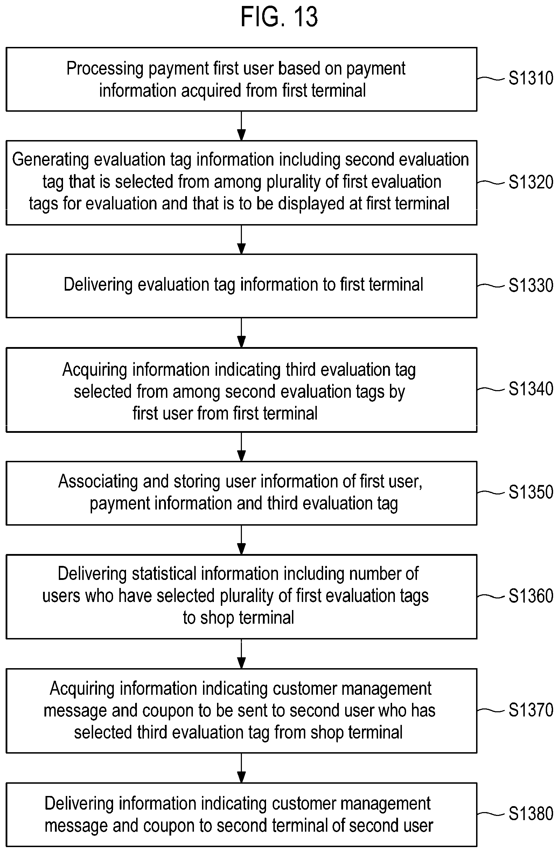

FIG. 13 is a diagram showing an embodiment of a customer management method that may be performed by the server 100 according to the present disclosure. The customer management method according to the present disclosure may be a computer-implemented method. Although the operations of the method or algorithm according to the present disclosure have been described in a sequential order in the illustrated flowchart, the operations may be performed in any order that may be arbitrarily combined by the present disclosure as well as in the sequential order. The description according to the flowchart does not exclude making changes or modifications to the method or algorithm and does not mean that any operation is necessary or desirable. In an embodiment, at least some operations may be carried out in parallel, repeatedly, or heuristically. In an embodiment, at least some operations may be omitted or an additional operation may be added.

The server 100 according to the present disclosure may perform the customer management method according to various embodiments of the present disclosure. The customer management method according to an embodiment of the present disclosure may include processing a payment by a first user 120 (S1310), generating evaluation tag information 102 (S1320), delivering the evaluation tag information 102 to a first terminal 130 (S1330), acquiring information indicating a third evaluation tag selected by the first user 120 (S1340), storing the third evaluation tag (S1350), delivering statistical information 136 to a shop terminal 150 (S1360), acquiring information indicating a customer management message 152 and a coupon 154 from the shop terminal 150 (S1370), and/or delivering the information indicating the customer management message 152 and the coupon 154 to a second terminal 170.

In S1310, a processor 210 of a server 100 may process a payment by the first user 120 based on payment information 132 acquired from the first terminal 130 of the first user 120 among a plurality of users 110. In S1320, the processor 210 may generate evaluation tag information 102 including at least one second evaluation tag that is selected from among a plurality of first evaluation tags for a shop and that is to be displayed at the first terminal. In S1330, the processor 210 may deliver the evaluation tag information 102 to the first terminal 130.

In S1340, the processor 210 may acquire, from the first terminal 130, information indicating a third evaluation tag selected by the first user 120 from among the at least one second evaluation tag. In S1350, the processor 210 may associate and store user information of the first user 120, payment information 132 of the first user 120, and/or the third evaluation tag in a memory 220.

In S1360, the processor 210 may deliver, to the shop terminal 150, statistical information 136 including the number of users who have selected each of a plurality of first evaluation tags from among the plurality of users 110 for a predetermined period. In S1370, the processor 210 may acquire, from the shop terminal 150, information indicating a customer management message 152 and a coupon 154 to be sent to at least one second user 160 who has selected the third evaluation tag among the plurality of users 110. In S1380, the processor 210 may deliver the information indicating the customer management message 152 and the coupon 154 to a second terminal 170 of the at least one second user 160.

In an embodiment, generating the evaluation tag information (S1320) may include generating, by the processor 210, evaluation tag information 102 including a first evaluation tag group and a second evaluation tag group.

In an embodiment, generating the evaluation tag information 102 (S1320) may include determining, by the processor 210, an average value of amounts that have been paid by the plurality of users 110 based on payment history information 410 of the plurality of users 110; comparing, by the processor 210, the determined average value to a first amount to be paid by the first user 120 which is acquired from the payment information 132; upon determining that the first amount to be paid is smaller than the determined average value by a predetermined percentage 420 or higher, the processor 210 adds an evaluation tag corresponding to a positive evaluation on a price level of the shop to the first evaluation tag group; and/or upon determining that the first amount to be paid is larger than the determined average value by the predetermined percentage 420 or higher, the processor 210 adds an evaluation tag corresponding to a negative evaluation on the price level of the shop to the second evaluation tag group.

In an embodiment, generating the evaluation tag information 102 (S1320) may include determining, by the processor 210, whether a reception time when the payment information 132 is acquired from the first terminal 130 is within a predetermined time interval 510 in business hours of the shop; upon determining that the reception time is not within the time interval 510, the processor 210 adds an evaluation tag corresponding to a positive evaluation on an atmosphere and a service level of the shop to the first evaluation tag group; and/or upon determining that the reception time is within the time interval 510, the processor 210 adds an evaluation tag corresponding to a negative evaluation on the atmosphere and the service level of the shop to the second evaluation tag group.

In an embodiment, acquiring the information indicating the customer management message 152 and the coupon 154 (S1370) may include determining, by the processor 210, at least one recommended message 610 and at least one recommended coupon 620 that correspond to the third evaluation tag and that are to be displayed at the shop terminal 150; delivering, by the processor 210, information indicating the at least one recommended message 610 and the at least one recommended coupon 620 to the shop terminal 150; and/or acquiring, by the processor 210, from the shop terminal 150, information indicating a customer management message 152 selected from among the at least one recommended message 610 and a coupon selected from among the at least one recommended coupon 620.

In an embodiment, determining the information indicating the customer management message 152 and the coupon 154 may include, when the third evaluation tag is an evaluation tag corresponding to a negative evaluation on the price level of the shop, the processor 210 determines a price discount coupon for the shop for each discount rate as the at least one recommended coupon 620, and determines the each discount rate for the price discount coupon in proportion to the ratio of the number of users who have selected the third evaluation tag to the plurality of users 110.

In an embodiment, the customer management method according to the present disclosure may include acquiring, by the processor 210, designated-user determination information 910 including at least one of a payment number condition, a payment amount condition, and a payment frequency condition of designated users 920 of the shop from a shop terminal 150; determining, by the processor 210, at least one of a plurality of users 110 as the designated users 920 of the shop based on designated-user determination information 910 and payment history information 410 for the shop of the plurality of users 110; delivering information indicating the number of the designated users 920 to the shop terminal 150; acquiring, from the shop terminal 150, designated-user benefit information 940 indicating benefits to be provided to the designated users 920; and/or delivering, by the processor 210, to the terminals of the designated users 920, information for displaying the benefits and information for generating an image indicating that a corresponding user is one of the designated users 920 based on the designated-user benefit information 940.

According to the present disclosure in some embodiments, by presenting choices that a customer can select for shop evaluation to the customer based on his or her disposition, it is possible to acquire VoC from the customer without bothering the customer.

According to the present disclosure in some embodiments, it is possible to effectively provide customer management messages and coupons related to a customer's complaints to the customer.

According to the present disclosure in some embodiments, it is possible to easily set a criterion for determining a regular customer, and to find an expected number of regular customers according to the criterion. Also, by transmitting information for identifying that a customer is one of regular customers to a terminal of the corresponding customer, the clerk of the shop can easily recognize and manage regular customers.

The various embodiments of the present disclosure may be implemented in software recorded in a machine-readable recording medium. The software may be software for implementing the aforementioned various embodiments of the present disclosure. The software may be inferred from the various embodiments of the present disclosure by programmers in the art to which the present disclosure belongs. For example, the software may be commands (e.g., code or code segments) or a program that is readable by a machine. The machine may be an apparatus operable according to a command called from a recording medium and may be, for example, a computer. In an embodiment, the machine may be the server 100 according to the embodiments of the present disclosure. In an embodiment, a processor of the machine may execute a called command to enable components of the machine to perform a function corresponding to the relevant command. In an embodiment, the processor may be provided as the one or more processors 210 according to the embodiments of the present disclosure. The recording medium may refer to any kind of machine-readable recording medium where data is stored. Examples of the recording medium include a read-only memory (ROM), a random-access memory (RAM), a CD-ROM, a magnetic tape, a floppy disk, an optical data storage device, and the like. In an embodiment, the recording medium may be the one or more memories 220. In an embodiment, the recording medium may be implemented by being distributed to computer systems or the like connected through a network. The software may be distributed to and stored and executed in computer systems or the like. The recording medium may be a non-transitory recording medium. The non-transitory recording medium may refer to a tangible medium regardless of whether data is stored semi-permanently or temporarily and does not include signals propagating in a transitory manner.

Although the technical scope of the present disclosure has been described with reference to various embodiments, the technical scope of the present disclosure covers various substitutions, modifications, and changes that can be made by those skilled in the art. Also, it is to be understood that these substitutions, modifications, and changes would fall within the scope of the appended claims.

## Claims

1. A server for managing a plurality of users who make payments in a shop, the server comprising:
one or more processors; and
one or more memories storing commands that cause the one or more processors to perform an operation when the commands are executed by the one or more processors,
wherein the one or more processors are configured to:
process a payment by a first user among the plurality of users based on payment information acquired from a first terminal of the first user;
generate evaluation tag information including at least one second evaluation tag that is selected from among a plurality of first evaluation tags for the shop and that is to be displayed at the first terminal;
deliver the evaluation tag information to the first terminal;
acquire, from the first terminal, information indicating a third evaluation tag selected by the first user from among the at least one second evaluation tag;
associate and store user information of the first user, the payment information, and the third evaluation tag in the one or more memories;
deliver, to a shop terminal of the shop, statistical information including the number of users who have selected each of the plurality of first evaluation tags for a predetermined period from among the plurality of users;
acquire, from the shop terminal, information indicating a customer management message and a coupon to be sent to at least one second user who has selected the third evaluation tag among the plurality of users; and
deliver the information indicating the customer management message and the coupon to a second terminal of the at least one second user.

2. The server of Claim 1, wherein each of the plurality of first evaluation tags includes a positive evaluation or a negative evaluation on one category selected from among a quality level, a price level, a service level, and an atmosphere of the shop.

3. The server of Claim 2, wherein the one or more processors are further configured to:
generate the evaluation tag information including a first evaluation tag group and a second evaluation tag group,
wherein the first evaluation tag group includes an evaluation tag to be displayed at the first terminal among the at least one second evaluation tag according to an input, to the first terminal by the first user, that indicates the first user is willing to return to the shop, and
wherein the second evaluation tag group includes an evaluation tag to be displayed at the first terminal among the at least one second evaluation tag according to an input, to the first terminal by the first user, that indicates the first user is not willing to return to the shop.

4. The server of Claim 3, wherein the one or more processors are further configured to:
determine an average value of amounts that have been paid by the plurality of users based on payment history information of the plurality of users for the shop;
compare the average value to a first amount to be paid by the first user which is acquired from the payment information;
upon determining that the first amount to be paid is smaller than the average value by a predetermined percentage or higher, add an evaluation tag corresponding to a positive evaluation on the price level of the shop to the first evaluation tag group; and
upon determining that the first amount to be paid is larger than the average value by the predetermined percentage or higher, add an evaluation tag corresponding to a negative evaluation on the price level of the shop to the second evaluation tag group.

5. The server of Claim 3, wherein the one or more processors are further configured to:
determine whether a reception time when the payment information is acquired from the first terminal is within a predetermined time interval in business hours of the shop;
upon determining that the reception time is not within the time interval, add an evaluation tag corresponding to a positive evaluation on the atmosphere and the service level of the shop to the first evaluation tag group; and
upon determining that the reception time is within the time interval, add an evaluation tag corresponding to a negative evaluation on the atmosphere and the service level of the shop to the second evaluation tag group.

6. The server of Claim 3, wherein the one or more processors are further configured to:
acquire, from the one or more memories, evaluation tags previously selected for the shop by the first user;
determine a category that the previously selected evaluation tags indicate with a highest frequency among the quality level, the price level, the atmosphere, and the service level of the shop; and
add an evaluation tag corresponding to a positive evaluation on the determined category to the first evaluation tag group, and add an evaluation tag corresponding to a negative evaluation on the determined category to the second evaluation tag group.

7. The server of Claim 1, wherein the one or more processors are further configured to:
determine at least one recommended message and at least one recommended coupon that correspond to the third evaluation tag and that are to be displayed at the shop terminal;
deliver information indicating the at least one recommended message and the at least one recommended coupon to the shop terminal; and
acquire, from the shop terminal, information indicating the customer management message selected from among the at least one recommended message, and information indicating the coupon selected from among the at least one recommended coupon.

8. The server of Claim 7, wherein the one or more processors are further configured to:
when the third evaluation tag is an evaluation tag corresponding to a negative evaluation on a price level of the shop, determine a price discount coupon for the shop for each discount rate as the at least one recommended coupon; and
determine the each discount rate for the price discount coupon in proportion to a ratio of the number of users who have selected the third evaluation tag to the plurality of users.

9. The server of Claim 1, wherein the one or more processors are further configured to:
at the time when the coupon expires, deliver, to the shop terminal, information indicating the number of at least one third user who has used the coupon among the at least one second user, and information indicating a sales amount incurred in the shop by the at least one third user.

10. The server of Claim 1, wherein the one or more processors are further configured to:
acquire, from the shop terminal, designated-user determination information including at least one of a payment number condition, a payment amount condition, and a payment frequency condition of designated users for the shop;
determine at least one of the plurality of users as the designated users for the shop based on payment history information for the shop of the plurality of users and the designated-user determination information;
deliver information indicating the number of the designated users to the shop terminal;
acquire, from the shop terminal, designated-user benefit information indicating a benefit to be provided to the designated users; and
deliver, to terminals of the designated users, information for displaying the benefit and information for generating an image indicating that a corresponding user is one of the designated users based on the designated-user benefit information.

11. A method of managing a plurality of users who make payments in a shop, the method being performed by a server including one or more processors and one or more memories storing commands to be executed by the one or more processors, the method comprising:
processing a payment by a first user among the plurality of users based on payment information acquired from a first terminal of the first user;
generating evaluation tag information including at least one second evaluation tag that is selected from among a plurality of first evaluation tags for the shop and that is to be displayed at the first terminal;
delivering the evaluation tag information to the first terminal;
acquiring, from the first terminal, information indicating a third evaluation tag selected by the first user from among the at least one second evaluation tag;
associating and storing user information of the first user, the payment information, and the third evaluation tag in the one or more memories;
delivering, to a shop terminal of the shop, statistical information including the number of users who have selected each of the plurality of first evaluation tags for a predetermined period from among the plurality of users;
acquiring, from the shop terminal, information indicating a customer management message and a coupon to be sent to at least one second user who has selected the third evaluation tag among the plurality of users; and
delivering the information indicating the customer management message and the coupon to a second terminal of the at least one second user.

12. The method of Claim 11, wherein each of the plurality of first evaluation tags includes a positive evaluation or a negative evaluation on one category selected from among a quality level, a price level, a service level, and an atmosphere of the shop.

13. The method of Claim 12, wherein generating the evaluation tag information includes:
generating the evaluation tag information including a first evaluation tag group and a second evaluation tag group,
wherein the first evaluation tag group includes an evaluation tag to be displayed at the first terminal among the at least one second evaluation tag according to an input, to the first terminal by the first user, that indicates the first user is willing to return to the shop, and
wherein the second evaluation tag group includes an evaluation tag to be displayed at the first terminal among the at least one second evaluation tag according to an input, to the first terminal by the first user, that indicates the first user is not willing to return to the shop.

14. The method of Claim 11, wherein acquiring the information indicating the customer management message and the coupon includes:
determining at least one recommended message and at least one recommended coupon that correspond to the third evaluation tag and that are to be displayed at the shop terminal;
delivering information indicating the at least one recommended message and the at least one recommended coupon to the shop terminal; and
acquiring, from the shop terminal, information indicating the customer management message selected from among the at least one recommended message, and information indicating the coupon selected from among the at least one recommended coupon.

15. The method of Claim 14, wherein determining the at least one recommended message and the at least one recommended coupon includes
when the third evaluation tag is an evaluation tag corresponding to a negative evaluation on the price level of the shop, determining a price discount coupon for the shop for each discount rate as the at least one recommended coupon, and
determining the each discount rate for the price discount coupon in proportion to a ratio of the number of users who have selected the third evaluation tag to the plurality of users.
